# EUROPEAN PATENT APPLICATION

(11) **EP 0 665 157 A1**
(43) Date of publication of application: **02.08.1995**
(21) Application number: 94830578.4
(22) Date of filing: 20.12.1994
(51) Int. Cl.: B62D 5/06, B62D 6/02

(54) **Power-steering device for motor-vehicles**

(30) Priority: 22.12.1993 IT TO930984; 07.07.1994 IT TO940557
(71) Applicant: CENTRO RICERCHE FIAT Società Consortile per Azioni, I-10043 Orbassano (Torino) (IT)
(72) Inventor: Mesiti, Domenico, I-10040 Leini', Torino (IT); Avenatti, Renzo, I-10080 Feletto Canavese, Torino (IT)
(74) Representative: Notaro, Giancarlo

(57) **Abstract**

A power-steering device of the energy saving type comprises at least one closed-center pressure proportional solenoid valve (16) which controls fluid under pressure supplied to a hydraulic actuator (7).

## Description

The present invention relates to power-steering devices for motor-vehicles, of the type comprising:
- a rack controlling the steering of the motor-vehicle wheels,
- a pinion meshing with said rack and connected to the motor-vehicle steering column,
- a hydraulic actuator for assisting the movement of said rack,
- a pump for supplying the hydraulic actuator, and
- valve means for controlling the supply of fluid to said hydraulic actuator.

The technical problem which is at the basis of the present invention is that of providing a power-steering device of the above indicated type which on one hand ensures energy saving and on the other hand provides a flexible control of the power-steering characteristics, so as to provide a good feeling by the driver during steering and improve active safety.

In order to achieve these objects, the invention is directed to a device of the above indicated type, characterized in that said valve means comprises at least one closed-center pressure proportional solenoid valve interposed in the connection of the pump to the hydraulic actuator, said device further comprising:
- a hydraulic accumulator connected to the output of the pump,
- a torque sensor associated with the steering column, and
- an electronic control unit which receives the output signal of said sensor and controls the operation of said proportional valve.

In a first embodiment, two closed-center pressure proportional solenoid valves are respectively interposed in the connection of the pump to the two chambers of the hydraulic actuator.

In a second embodiment, there is provided a single closed-center pressure proportional solenoid valve and a closed-center control valve is interposed in the connection of said proportional solenoid valve to the hydraulic actuator and is controlled by the steering column so as to supply fluid under pressure selectively to one or the other of the two chambers of the hydraulic actuator depending upon the direction of rotation of the steering column.

The use of one or more pressure proportional solenoid valves (i.e. valves whose output-pressure is a proportional function of the electric current supplied), with closed-center provides an energy saving with respect to the conventional solutions which have a power-steering valve mechanically controlled by the steering column and of the opened-center type. In these conventional solutions, when the valve is in its neutral position, it is continuously fed by the pump with fluid which is discharged through the valve itself.

In the device according to the invention, in the absence of steering manoeuvres, there is no fluid circulating and the pump is active only if the pressure in the accumulator falls below a predetermined value.

According to a further preferred feature of the invention, said pump is driven by an electric motor, which is also controlled by said electronic control unit. However, the use of a driving transmission connected to the internal combustion engine of the motor-vehicle for driving the pump is not excluded. In the case of the preferred embodiment using an electric motor, the use of the hydraulic accumulator provides the advantage of requiring a smaller pump and therefore an electric motor of a type which may be supplied with a low current. As already indicated, however, it is also possible to provide any other type of driving system for the pump which is consistent with the object of saving energy which is at the basis of the proposed solution.

Furthermore, the use of proportional solenoid valves enables the law which binds the fluid pressure supplied to the hydraulic actuator to the torque on the steering wheel to be easily varied as a function of the speed of the vehicle and, if desired, of other parameters, such as the lateral acceleration of the vehicle and the angle of rotation of the steering wheel. Therefore, the device according to the invention provides a flexible control of this law to the advantage of the feeling by the driver during steering and active safety in any running condition of the motor-vehicle.

Further features and advantages of the invention will become apparent from the description which follows with reference to the annexed drawings, given purely by way of non-limiting example, in which:
figure 1 shows a diagram of a first embodiment of the device according to the invention, and
figure 2 shows a diagram of a second embodiment of the device according to the invention.

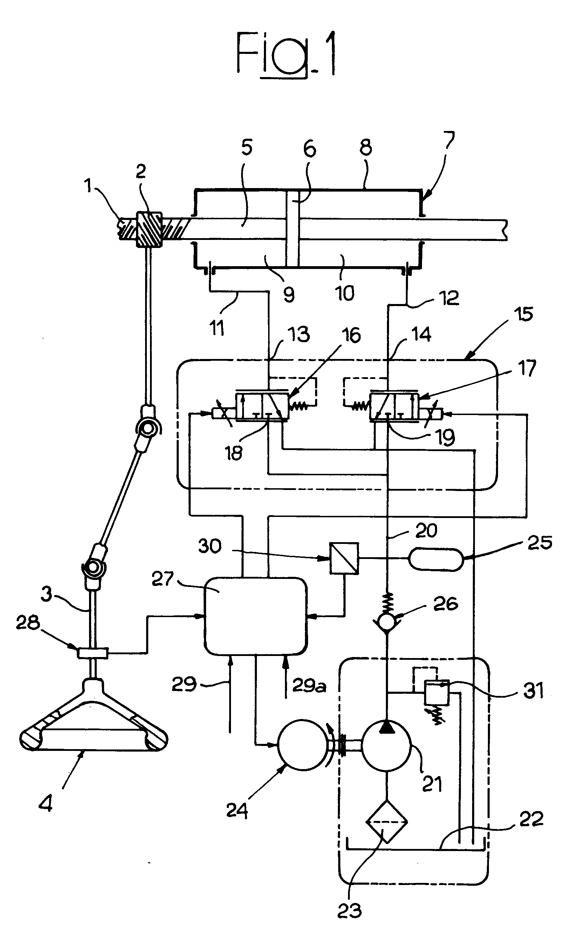

With reference to figure 1, reference numeral 1 designates the conventional rack which drives the steering of the motor-vehicle wheels, meshing with a pinion 2 which is connected to the shaft 3 of the steering wheel 4 of the motor-vehicle. In order to assist the movement of rack 1, the latter is rigidly connected to the stem 5 of the piston 6 of a hydraulic actuator 7 having a body 8 in which there are defined two chambers 9, 10. These chambers are communicated through lines 11, 12 to outlets 13, 14 of a valve block 15 including two closed centre proportional solenoid valves 16, 17. The two valves 16, 17 have inlets 18, 19 communicating with a line 20 connected to the output of a feeding pump 21 which draws fluid by a tank 22 through a filter 23 and is driven by an electric motor 24. To the line 20 there is connected a hydraulic accumulator 25 and a one-way valve 26 is interposed in line 20, between pump 21 and the connecting point of accumulator 25. The electric motor 24 and the two proportional solenoid valves 16, 17 are controlled by an electronic control unit 27 on the basis of the signal sent by a torque sensor 28 applied to the shaft 3 and a signal 29 responsive to the speed of the motor-vehicle, as well as the signal coming from a sensor 30 sensing the pressure within hydraulic accumulator 25.

In operation, if pressure within the accumulator is above the minimum threshold the pump is inactive. When the steering wheel is rotated, the electronic unit 27 pilots the two valves 16, 17 in order to feed the hydraulic actuator 7, so as to provide a desired power steering law, i.e. a desired law of variation of the pressure fed to the hydraulic actuator as a function of the torque on the steering wheel. Such law may also be varied with the speed of the vehicle, so as to achieve a good feeling of the steering by the driver and a good safety.

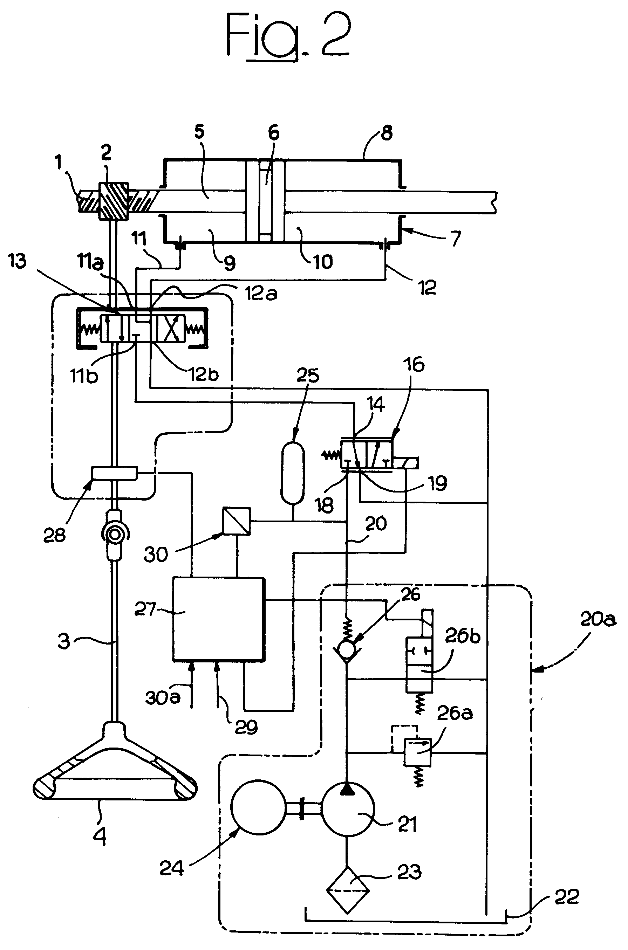

With reference to figure 2, reference numeral 1 designates the conventional rack which drives the steering of the motor-vehicle wheels, meshing with a pinion 2 which is connected to the column 3 of the steering wheel 4 of the motor-vehicle. In order to assist the movement of rack 1, the latter is rigidly connected to the stem 5 of the piston 6 of a hydraulic actuator 7 having a body 8 in which there are defined two chambers 9, 10. These chambers are communicated through lines 11, 12 to outlets 11a, 12a of a closed-center control valve, which is controlled by the column 3 so as to communicate the two outlets 11a, 12a to two inlets 11b, 12b respectively, or viceversa, depending upon the rotation of the column. The two inlets 11b, 12b of the control valve 13 are connected to the outlet 14 of a closed-centre proportional solenoid valve 16, and to a discharge reservoir 22.

The proportional solenoid valve 16 has two inlets 18, 19. Inlet 18 is connected to a line 20 connected to the output of a hydraulic supply unit 20a, including a supply pump 21 which draws fluid at atmospheric pressure from the tank 22 through a filter 23 and is driven, in the case of the preferred embodiment herein disclosed, by an electric motor 24. To the line 20 there is also connected a hydraulic accumulator 25 and a one-way valve 26 is interposed in line 20, between pump 21 and the connecting point of accumulator 25. The supply unit 20a further includes a relief valve 26a able to discharge the fluid fed by pump 21 above a determined pressure and a solenoid valve 26b able to control the pressure in accumulator 25

The electric motor 24, the solenoid valve 26b and the proportional solenoid valve 16 are controlled by an electronic control unit 27 mainly on the basis of the signal sent by a torque sensor 28 applied to the column 3 and a signal 29 indicating the speed of the motor-vehicle, as well as the signal coming from a sensor 30 sensing the pressure within hydraulic accumulator 25 and if desired a signal 30a indicating further parameters, such as the vehicle acceleration.

In operation, if pressure within the accumulator 25 is above the maximum threshold, the pump is inactive or connected to discharge through valve 26b. When the steering wheel is rotated, the electronic unit 27 controls valve 16 so as to feed the hydraulic actuator 7 through control valve 13, which provides for fluid to be fed to either one of the two chambers 9,10 depending upon the direction of rotation of column 4. Control unit 27 controls valve 16 so as to provide an assistance law (law of variation of the pressure as a function of the torque on the steering wheel) which changes with the variation of the vehicle speed and other parameters, such as the lateral acceleration, so as to best improve the driver feeling and active safety.

Naturally, while the principle of the invention remains the same, the details of construction and the embodiments may widely vary with respect to what has been described and illustrated purely by way of example.

## Claims

1. Power-steering device for motor-vehicles, comprising:
- a rack (1) for controlling the steering of the motor-vehicle wheels,
- a pinion (2) meshing with the rack (1) and connected to the column (3) of the steering wheel (4) of the motor-vehicle,
- a hydraulic actuator (7) for assisting the movement of the rack (1),
- a pump (21) for supplying fluid to the hydraulic actuator (7), and
- valve means (16) for controlling the fluid supplied to the hydraulic actuator (7),
characterized in that said valve means comprises at least one closed-center pressure proportional solenoid valve (16) interposed in the connection between the pump (21) and the hydraulic actuator (7), said device further including
- a hydraulic accumulator (25) connected to the output of the pump (21),
- a torque sensor (28) associated with the column (3) of the steering wheel,
- an electronic control unit (27) which receives the output signal of said sensor and controls the operation of said proportional valve (16).

2. Device according to claim 1, characterized in that it comprises two closed-center pressure proportional solenoid valves respectively interposed in the connection between the pump (21) and the two chambers of the hydraulic actuator (7).

3. Device according to claim 1, characterized in that it includes a single closed-center pressure proportional solenoid valve (16) interposed in the connection between the pump (21) and the hydraulic actuator (7), and a closed-center control valve (13) interposed in the connection between the proportional solenoid valve (16) and the hydraulic actuator (7) and controlled by the steering column (3) so as to supply fluid under pressure selectively to one or the other of the two chambers (9, 10) of the hydraulic actuator (7) depending upon the direction of rotation of the steering column.

4. Device according to claim 1, characterized in that said electronic control unit (27) also receives the signal (28; 29) coming from a motor-vehicle speed sensor and the signal coming from a sensor (30) sensing the pressure of the hydraulic accumulator (25).

5. Device according to claim 1, characterized in that said electronic control unit (27) is able to control the, or each, pressure proportional solenoid valve (16; 16, 17) so as to change the power-steering characteristic as a function of the parameters of operation of the vehicle.

6. Device according to claim 1, characterized in that said pump is driven by an electric motor, which is also controlled by said electronic control unit (27).

7. Device according to claim 1, characterized in that said electronic control unit is arranged for receiving auxiliary signals (29a, 30a) indicating further parameters, such as the lateral acceleration of the vehicle and the angle of rotation of the steering wheel.
